# EUROPÄISCHE PATENTANMELDUNG

(11) **EP 2 998 764 A1**
(43) Veröffentlichungstag der Anmeldung: **23.03.2016**
(21) Anmeldenummer: 15185678.8
(22) Anmeldetag: 17.09.2015
(51) Int. Cl.: G01S 17/66, G01B 5/004, G01B 11/00

(54) **VERFAHREN ZUM ABSTECKEN VON MESSPUNKTEN**

(30) Priorität: 22.09.2014 DE 102014013724
(71) Anmelder: Enders, Andreas, 13437 Berlin (DE)
(72) Erfinder: Enders, Andreas, 13437 Berlin (DE)
(74) Vertreter: Lendvai, Tomas

(57) **Zusammenfassung**

Verfahren zum Abstecken von Messpunkten, wobei
- Konstruktionsdaten gespeichert und Messpunkte aus den Konstruktionsdaten extrahiert werden,
- die Messpunkte abgesteckt werden,
- die Messpunkte aus den Konstruktionsdaten mit den abgesteckten Messpunkten abgeglichen werden,
- den Messpunkten aus den Konstruktionsdaten 3D-Koordinaten (x, y, z) zugewiesen werden und
- die Markierung der Messpunkte über eine T-Probe erfolgt, wobei die T-Probe an eine nach Konstruktionsdaten angezeigte 3D-Koordinate (x, y, z) herangeführt wird und die 3D-Koordinate in derselben Farbe angezeigt wird, wenn sich die T-Probe innerhalb vorgegebener Toleranzen befindet.

## Beschreibung

Die vorliegende Erfindung betrifft ein Verfahren zum Abstecken von Messpunkten mit hoher Genauigkeit.

Aus DE 4216606 A1 ist ein Verfahren zur Fertigung und zum Ausbau von Schienenfahrzeugwagenkästen mit hoher Maßgenauigkeit bekannt, bei dem die einzelnen Bauteile gefügt und mit- oder untereinander fest oder lösbar arretiert werden. Bei dem Verfahren werden bereits während der Fertigung der einzelnen Baugruppen, wie Untergestell, Dach, Seiten- und Stirnwände, diese mit anzuordnenden Bezugspunkten versehen. Die Bezugspunkte werden während der Fertigung oder dem Ausbau des Wagenkastens zum Anlegen von Schablonen als Bezugspunkte innerhalb einer Baugruppe zu anderen Baugruppen oder zu äußeren Vorrichtungen bei der Montage der Baugruppen zum maßgenauen Fixieren genutzt, um die Bezugspunkte gegebenenfalls abschließend mit dem Fortschreiten und Beenden des Innenausbaus zu verkleiden.

Aus DE 102010000777 A1 ist ein Verfahren zur Montage eines Karosseriebauteils an eine Rohkarosserie eines Fahrzeugs mit Seitenwänden mit folgenden Verfahrensschritten bekannt. Die tatsächliche Lage eines Teilbereiches einer der Seitenwände in der Rohkarosserie bezüglich einer ersten Koordinate des Fahrzeugs wird vermessen. Mindestens ein Referenzpunkt bezüglich der ersten Koordinate des Fahrzeugs für das zu montierende Karosseriebauteil auf der Grundlage der Vermessung wird erstellt. Das zu montierende Karosseriebauteil wird relativ zu diesem zumindest einem Referenzpunkt angebracht.

Aus DE 19927005 C1 ist ein Verfahren zum Positionieren und Nivellieren von Auflagern für den Fußbodenaufbau und für sonstige Einbauteile auf dem Unterboden in Fahrzeugen bekannt. Dabei werden die Auflager für den Fußbodenaufbau in zueinander fluchtenden Reihen auf der von Längsträgern gestützten Bodenprofilplatte in Längs- und Querrichtung befestigt. Bei dem Verfahren wird von einer Bezugsfläche eine virtuelle Bezugsebene in Form eines Messrahmens sektionsweise über die Breite des Fahrzeuges aufgespannt mit dem die Auflager in ihrer Lage exakt positioniert werden. Das Höhenniveau eines jeden positionierten Auflagers wird in Bezug zur Bezugsebene festgestellt und dessen Abweichung von der Bezugsebene wird durch Ausgleichselemente ausgeglichen. Anschließend wird der Messrahmen in die nächste Sektion zum Nivellieren der Auflager eingesetzt.

Beim herkömmlichen Verfahren zum Abstecken von Messpunkten wird mit Schablonen gearbeitet. Im Innenraum beispielsweise eines Waggons werden dazu etwa 1500 Befestigungspunkte angebracht. Bohrlöcher werden im Wageninneren angebracht damit im Innenraum Einrichtungen angebracht werden können. Die Messpunkte ergeben sich aus der Konstruktionszeichnung. Dafür müssen passende Schablonen gefertigt werden. Die Positionierung der Schablonen wird ermittelt. Der Abstand zum Rand, daher zu der oberen und unteren Kante im Fensterabschnitt wird gemessen. Dann wird die Schablone angesetzt. Die Schablonen müssen gefertigt und verwaltet werden. Bei geänderten Wagen müssen die Schablonen neu hergestellt werden.

Die Aufgabe der vorliegenden Erfindung ist es, ein schnelles, kostengünstiges, zuverlässiges und umweltfreundliches Verfahren zum Abstecken von Messlöchern mit hoher Genauigkeit und Zuverlässigkeit bereitzustellen.

Die Aufgabe wird durch ein erfindungsgemäßes Verfahren zum Abstecken von Messpunkten nach Patentanspruch 1 gelöst.

Die Aufgabe wird durch ein erfindungsgemäßes Verfahren zum Abstecken von Messpunkten gelöst, wobei
- Konstruktionsdaten gespeichert und Messpunkte aus den Konstruktionsdaten extrahiert werden,
- die Messpunkte abgesteckt werden,
- die Messpunkte aus den Konstruktionsdaten mit den abgesteckten Messpunkten abgeglichen werden,
- die Messpunkte aus den Konstruktionsdaten 3D-Koordinaten (x, y, z) zugewiesen werden und
- die Markierung der Messpunkte über eine T-Probe erfolgt, wobei die T-Probe an eine nach Konstruktionsdaten angezeigte 3D-Koordinate (x, y, z) herangeführt wird und die 3D-Koordinate in derselben Farbe angezeigt wird, wenn sich die T-Probe innerhalb vorgegebener Toleranzen befindet.

Eine bevorzugte Ausführungsform der Erfindung ist ein Verfahren zum Abstecken von Messpunkten eines Fahrzeugs, wobei Konstruktionsdaten des Fahrzeugs gespeichert und Messpunkte aus den Konstruktionsdaten extrahiert werden und die Messpunkte des Fahrzeugs abgesteckt werden. Bei einem Fahrzeug, insbesondere im Innenraum eines Fahrzeugs wie zum Beispiel bei einem Eisenbahnwaggon, bedeutet das Abstecken der Messpunkte auch ein Abstecken von anzubringenden Bohrlöchern.

Das erfindungsgemäße Verfahren zum Abstecken von Messpunkten ist gekennzeichnet durch folgende Verfahrensschritte:
- Die Konstruktionsdaten werden gesammelt und dokumentiert.
- Die Konstruktionsdaten werden aufbereitet. Dabei werden die Konstruktionsdaten bereinigt. Das heißt die Messpunkte, Bohrlöcher oder weitere, den Anforderungen entsprechende Informationen werden aus den Konstruktionsdaten extrahiert.
- Die Vermessung erfolgt vor Ort. Flexible Messgeräte werden positioniert, Flächen und Referenzpunkte werden gemessen. Der Messvorgang beginnt. Der Abgleich von virtuellem zu realem Raum erfolgt durch den Orientierungsprozess mittels Reflektorkugeln.

Für Planungsvorhaben oder zur Erfassung des Ist-Zustandes für Dokumentationszwecke sind oft die Geometrie eines Objektes oder lediglich Ausschnitte davon zu erfassen. Dabei handelt es sich um Einzelpunkte, Linien und Flächen. Ein Beispiel hierfür könnte eine Produktionshalle sein, die durch neue Maschinen oder eine andere Anordnung ergänzt oder optimiert werden soll. Um solche Rationalisierungsprozesse effektiv durchzuführen, müssen exakte Daten über die Position der Objekte im Raum gewonnen werden. Durch das erfindungsgemäße Verfahren werden Schablonen eingespart und die Nachteile, die sich aus der Verwendung von Schablonen ergeben aufgehoben. Die gesamte Bohrschablonen-Logistik entfällt, das heißt die Herstellung der Schablonen, Aufbewahrung und Archivierung und der Transport von Schablonen an den Ort der Vermessung. Das alles entfällt bei der Anwendung des erfindungsgemäßen Verfahrens. Die Zeitersparnis und die Kostenersparnis sind bemerkenswert. Personal kann aufgrund des Wegfalls von Schablonen eingespart werden. Besonders wichtig ist die stark erhöhte Präzision des erfindungsgemäßen Verfahrens. Die Messpunkte werden mit einer inneren und äußeren Genauigkeit positioniert. Durch die gleichzeitige automatische Protokollierung werden die Messergebnisse für eine Person leicht nachvollziehbar. Das erfindungsgemäße Verfahren ermöglicht einen sauberen Produktionsprozess. Durch die hohe Maßhaltigkeit entfällt die Nacharbeit und das bedeutet hohe Produktqualität.

Das erfindungsgemäße Verfahren eignet sich insbesondere dazu, Messpunkte insbesondere in Fahrzeugen abzustecken und diese so für die weitere Fertigung vorzubereiten. Mit dem erfindungsgemäßen Verfahren wird das herkömmliche Verfahren der Bohrschablonennutzung abgelöst und der Fertigungsprozess gestrafft und optimiert. Dabei hat sich gezeigt, dass das erfindungsgemäße Verfahren über eine dauerhafte Verfügbarkeit der Dienstleistung auch an mehreren Einsatzorten sowie über eine hohe zeitliche Flexibilität verfügt, um Leistungsspitzen jederzeit vermessungstechnisch begleiten zu können.

Eine vorteilhafte Ausgestaltung der vorliegenden Erfindung ist ein Verfahren, wobei Konstruktionsdaten als CAD/GIS-Daten unter Nutzung insbesondere von CATIA aufbereitet und wobei Punktdateien mit der 3D-Koordinate (x, y, z) exportiert werden und in CATIA ein dreidimensionales Modell erstellt wird.

In einem ersten Schritt werden CAD-Daten unter Nutzung von CATIA aufbereitet und Punktdateien mit den 3D-Koordinate (x, y, z) der Messpunkte exportiert. CATIA (Computer Aided Three-Dimensional Interactive Application) ist ein CAD-Programm. Der Konstruktionsprozess umfasst in CATIA die Erstellung dreidimensionaler Modelle sowie die Ableitung dazugehöriger zweidimensionaler Zeichnungen. Ebenso werden im weiteren Projektverlauf vorgenommene Änderungen am Konstruktionsmodell in das Datenmodell eingepflegt und für die weiteren Prozessschritte aufbereitet.

Für die eigentliche Absteckung der Messpunkte ist zuerst eine Orientierung des Messsystems erforderlich. Anschließend werden relevante Messpunkte mit einer gewünschten Punktgenauigkeit von maximal 0,1 mm zum Beispiel unter Berücksichtigung voneinander abhängiger Baugruppenelemente abgesteckt. Abschließend erfolgt die Kontrolle aller abgesteckten Messpunkte. Die dreidimensionalen Koordinaten aller abgesteckten Messpunkte werden in Sicherungsdateien protokolliert und archiviert. Das Messverfahren verkürzt die Absteckung von Messpunkten.

Eine vorteilhafte Ausgestaltung der Erfindung ist ein Verfahren, wobei jeweils 6 bis 12, bevorzugt 8 bis 10 Messpunkte in einem Orientierungsprozess mit einem mobilen Lasertracker gemessen werden. Dabei werden Flächenunebenheiten über eine Best-Fit Variante ausgeglichen.

Nach einer weiteren vorteilhaften Ausgestaltung der vorliegenden Erfindung werden am Fahrzeug jeweils 6 bis 12, bevorzugt 8 bis 10 Messpunkte auf den Seitenwänden, den Stirnwänden und dem Boden mit einem mobilen Lasertracker gemessen. Mit dieser Zahl der Messpunkte wird ein gutes Ergebnis erzielt.

Eine vorteilhafte Ausgestaltung der Erfindung ist ein Verfahren, wobei der Abgleich von virtuellem zu realem Raum durch Transformation erfolgt.

Nach einer weiteren vorteilhaften Ausgestaltung der vorliegenden Erfindung erfolgt der Abgleich von virtuellem zu realem Raum durch den Abgleich von Orientierungsprozess mittels Reflektorkugeln im Wagenkasten.

Eine vorteilhafte Ausgestaltung der Erfindung ist ein Verfahren, wobei die Referenz aus mindestens drei Reflektorkugeln besteht und die Reflektorkugeln fest an Fixpunkten montiert werden und den Ursprung des aufgespannten Koordinatensystems bilden.

Eine vorteilhafte Ausgestaltung der Erfindung ist ein Verfahren, wobei jeweils einem Messpunkt gemäß Konstruktionsdaten eine 3D-Koordinate (x, y, z) zugewiesen wird, indem an jeder Raumposition die drei Abstände des Messpunktes zu den Reflektorkugeln ermittelt werden und die Position des Messpunktes daraus mittels einer Trilateration bestimmt wird.

Trilateration ist ein Messverfahren zur Positionsbestimmung eines Punktes. Trilateration bedeutet, dass erst die Kenntnis der Entfernung zu drei bekannten Punkten eine eindeutige Bestimmung der Position im Raum ermöglicht. Zwar haben drei Kugelschalen zwei zueinander symmetrische Schnittpunkte, doch einer davon lässt sich meist durch Plausibilitätsüberlegungen ausschließen.

Der Vorteil dieses Verfahrens liegt in der freien Positionierbarkeit des Messvolumens. Des Weiteren stören kurze Strahlunterbrechungen eine Messung oder Messreihe nicht, da die eigentliche Messung der Reflexionssignale im Millisekundenbereich und jede Positionsbestimmung unabhängig und absolut erfolgt. Wenn für die Messungen herkömmliche Messverfahren verwendet werden, kann die Einrichtung oder Neuausrichtung von Maschinen mehrere Tage dauern. Mit dem erfindungsgemäßen Verfahren zur exakten und automatisierbaren Bestimmung von Raumkoordinaten sowie Abständen und Winkeln wird diese Messzeit auf wenige Stunden verkürzt.

Nach einer besonders vorteilhaften Ausgestaltung der vorliegenden Erfindung wird die 3D-Koordinate farblich rot angezeigt. Wenn die T-Probe innerhalb vorgegebener Toleranzen so geführt wird, dass die 3D-Koordinate grün angezeigt wird, ist die T-Probe innerhalb der vorgegebenen Toleranzen. Dann kann die Markierung des anzubringenden Messpunktes erfolgen. Die Anzeige erfolgt alternativ oder zusätzlich auch numerisch.

Nach einer vorteilhaften Ausgestaltung der vorliegenden Erfindung erfolgt gleichzeitig mit der Markierung des anzubringenden Messpunktes die Körnung des Messpunktes. Die direkte Kopplung von Messprozess und Körnung ist schnell und präzise.

Die vorliegende Erfindung wird weiter gelöst durch die Verwendung eines Lasertrackers für das erfindungsgemäße Verfahren zum Abstecken von Messpunkten. Der Lasertracker enthält einen Absolutdistanzmesser (ADM), einen Interferometer (IFM), eine positionsempfindliche Diode (PSD), einen Winkelencoder und einen Reflektor in Verbindung mit einer kabellosen T-Probe zum Abstecken von anzubringenden Befestigungspunkten bei Gebäuden, Brücken, Maschinen und in Fahrzeugen, Schiffen und Flugzeugen.

Mit einem Lasertracker wird ein Ziel automatisch erfasst, sobald es im Sichtfeld des Sensors liegt. Der Lasertracker verfügt über sechs Freiheitsgrade. Bei dem Lasertracker, zum Beispiel Leica AT901-MR, handelt es sich um ein mobiles Messsystem, welches vorzugsweise in der Präzisionsindustrie zum Einsatz kommt. Innerhalb des typischen Messvolumens von bis zu 18 m können mithilfe eines Laserstrahls präzise Messungen vorgenommen werden.

Das Interferometer (IFM) ist in der Lage, die absolute Distanz zu einem Reflektor zu messen. Das Gerät kann demnach einen unterbrochenen Laserstrahl gleich wiederherstellen und sofort das bewegliche Ziel messen. Mehrere eingebaute Redundanzsysteme sorgen für zuverlässige Messdaten.

Das leichte Design und die kompakten Abmessungen des Lasertrackers ermöglichen den Transport und Aufbau des Messgeräts durch nur eine Person, sodass der Lasertracker ortsungebunden und flexibel einsetzbar ist. Zusätzlich sorgt eine kurze Initialisierungsphase dafür, dass der Lasertracker schnell einsatzbereit ist.

In Verbindung mit einem Taster (T-Probe) bietet der Laser Tracker ein entsprechendes Arbeitsvolumen. Mithilfe von PowerLock und dem Interferometer (IFM) kann der Lasertracker absolute Distanzen zu einem Ziel mit einem Höchstmaß an Genauigkeit messen, sodass präzise Ergebnisse garantiert werden können. Eine T-Cam dient in Verbindung mit der T-Probe der Absteckung der Messpunkte.

Die T-Probe dient der tastenden Messung im statischen und dynamischen Messmodus. Erfassen von Punkten im Bereich von Hinterschneidungen und Messen verdeckter Punkte ist damit ebenso möglich wie das Erfassen von Kanten und geometrischen Elementen. Zur Vereinfachung der Handhabung verfügt die T-Probe über zwei im rechten Winkel zueinander angeordneten mechanischen Interfaces, die der Aufnahme der variabel zu gestaltenden Tastspitzen dienen und über Statusanzeigen in Form von farbigen LED verfügen.

Der Wechsel der einmal kalibrierten Tastspitzen wird automatisch erkannt und dem System direkt mitgeteilt. Die T-Probe verfügt über 6 Freiheitsgrade. Die T-Probe verfügt auch über längere Styli und eine Messweite von bis zu 30 m. Die T-Probe hat einen Nickwinkel: ±45°, Gierwinkel: ±45°, Rollwinkel: ±360°, eine Punktausgaberate bis zu 1.000 Hz und eine Trackinggeschwindigkeit > 1 m/s.

Die vorliegende Erfindung wird im Folgenden anhand eines Beispiels und anhand einer Zeichnung näher erläutert.

Es wird gezeigt in:
Fig. 1 eine sphärische Darstellung eines Eisenbahnwaggons mit einem Lasertracker im Innenraum eines Eisenbahnwaggons,
Fig. 2 eine sphärische Darstellung eines Eisenbahnwaggons mit einem Lasertracker im Innenraum eines Eisenbahnwaggons, entlang einer Schnittfläche A-A mit Blickrichtung aus S2 und
Fig. 3 eine sphärische Darstellung eines Eisenbahnwaggons mit einem Lasertracker und einer T-Probe im Innenraum des Eisenbahnwaggons entlang einer Schnittfläche A-A mit Blickrichtung aus S2.

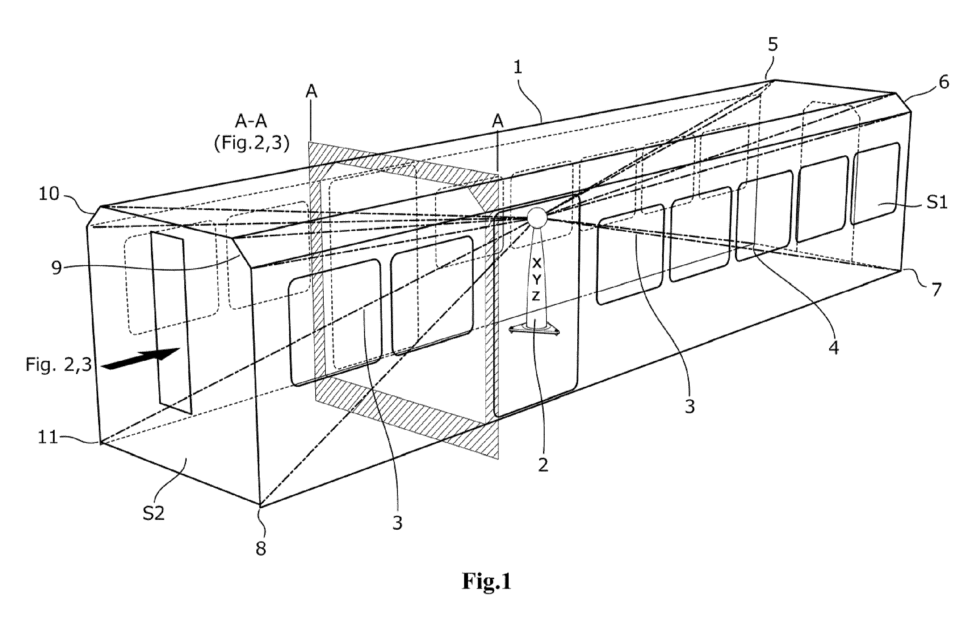

In Fig. 1 ist eine sphärische Darstellung eines Eisenbahnwaggons 1 mit einem Lasertracker 2 bei der Vermessung des Innenraumes des Eisenbahnwaggons 1 dargestellt. Der Lasertracker 2, zum Beispiel ein Leica AT901-MR wird in den Innenraum des Eisenbahnwaggons 1 gesetzt. Der Lasertracker 2 misst die Abmessungen zu den Innenwänden des Eisenbahnwaggons 1 und legt den Koordinatenursprung fest. Die Position des Lasertrackers 2 weist bezogen auf den Innenraum des Eisenbahnwaggons 1 ein Koordinatensystem mit der folgenden 3D Koordinate auf:
x Längsrichtung, daher in Fahrtrichtung,
y Querrichtung, daher quer zur Fahrtrichtung und
z oben oder unten.

Der Lasertracker 2 sendet einen Laserstrahl 3 in Richtung der Stirnseite S1 aus. Die Vermessung beginnt zum Beispiel in der unteren linken Ecke 4. Der Laserstrahl 3 fährt dann zum Beispiel nach oben in die obere linke Ecke 5. Der Laserstrahl 3 fährt dann horizontal von links in die obere rechte Ecke 6 und schließlich nach unten in die untere rechte Ecke 7. Danach sendet der Lasertracker 2 den Laserstrahl 3 in Richtung der zweiten Stirnseite S2 beginnend zum Beispiel mit der rechten unteren Ecke 8 über die rechte obere Ecke 9, die obere linke Ecke 10 bis zur unteren linken Ecke 11 ebenso wie bei S1 ab. Es werden jeweils 8 bis 10 Messpunkte auf den Seitenwänden, den Stirnwänden und dem Boden mit einem mobilen Lasertracker 2 gemessen.

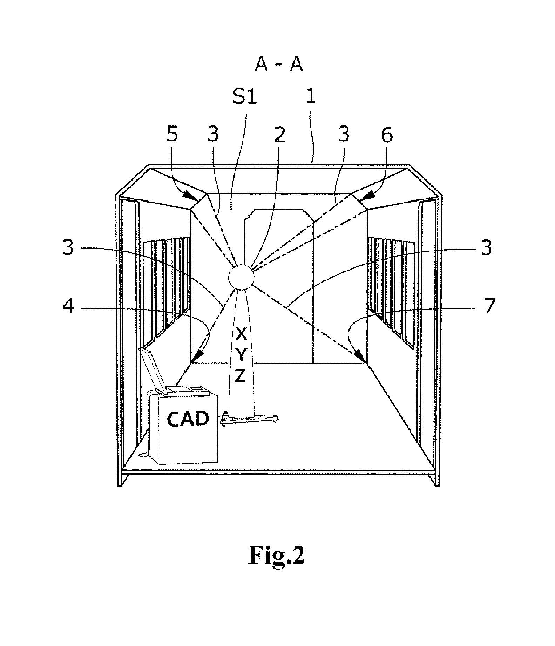

Fig. 2 ist eine sphärische Darstellung eines Eisenbahnwaggons 1 mit einem Lasertracker 2 im Innenraum des Eisenbahnwaggons 1 entlang einer Schnittfläche A-A mit Blickrichtung aus S2. Die Darstellung ermöglicht den Einblick in den Innenraum des Eisenbahnwaggons 1. In Fig. 2 wird noch deutlicher gezeigt, wie der Lasertracker 2 die Abmessungen zu den Innenwänden des Waggon 1 misst und bezogen auf die Innenwände des Eisenbahnwaggons 1 einen Koordinatenursprung für weitere Vermessungen im Innenraum des Eisenbahnwaggons 1 festlegt.

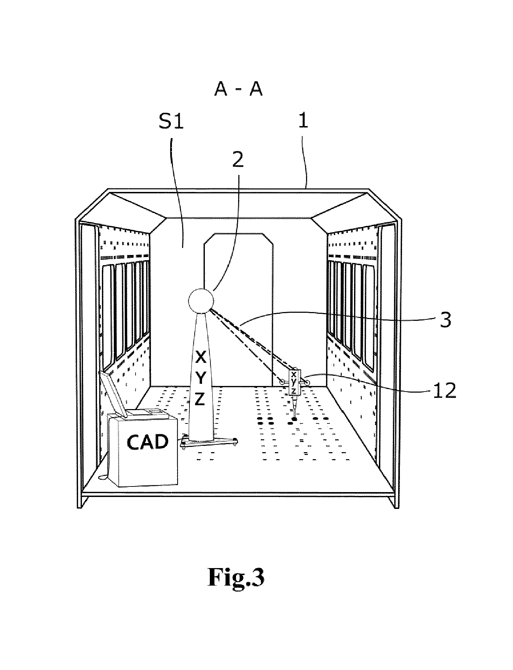

Fig. 3 ist eine sphärische Darstellung eines Eisenbahnwaggons 1 mit einem Lasertracker 2 und einer T-Probe 12 im Innenraum des Eisenbahnwaggons entlang einer Schnittfläche A-A mit Blickrichtung aus S2. Messpunkte aus den Konstruktionsdaten werden mittels einer T-Probe 12, zum Beispiel eine Leica T-Probe im Innenraum des Eisenbahnwaggon 1 abgesteckt. Zuvor wurden Konstruktionsdaten des Eisenbahnwaggons 1 im Messsystem gespeichert und Messpunkte aus den Konstruktionsdaten extrahiert. Die Messpunkte werden 3D-Koordinaten (x, y, z) im Eisenbahnwaggon 1 zugewiesen und mit der T-Probe 12 abgesteckt. Beim Abstecken der Messpunkte wird die Abweichung der T-Probe 12 von der Sollposition der Messpunkte auf einem Bildschirm numerisch und farblich angezeigt. Befindet sich die kabellose T-Probe 12 innerhalb der vorgegebenen Toleranzen eines Messpunktes, wandelt sich die farbliche Darstellung zum Beispiel von rot auf grün. Danach kann die Markierung des Messpunktes erfolgen.

### Beispiel

Der Messvorgang wird nach einem Beispiel in den folgenden Schritten vorgenommen.

### 1. Festlegung des Ist-Koordinatenursprungs.

Daraus ergibt sich ein Koordinatensystem mit der folgenden 3D Koordinate (x: Längsrichtung, daher in Fahrtrichtung, y: Querrichtung, daher quer zur Fahrtrichtung und z: oben oder unten).

Die Rohkarosse eines Eisenbahnwagens wir angeliefert. Nach Überprüfung der Karosserie werden die Bohrlöcher abgesteckt. Mithilfe der T-Probe des Lasertrackers von Leica AT 901 MR werden jeweils etwa 8-10 Messpunkte auf den Seitenwänden, den Stirnwänden und dem Boden der Rohkarosse gemessen. Aus den Messpunkten werden in CAD (Polyworks) im Best-Fit-Verfahren neue Flächen für die Seiten- und Stirnwände sowie für den Boden erarbeitet. Parallel zu den so ermittelten neuen Seitenflächen wird eine Mittelebene in CAD ermittelt, die zu den beiden anderen Flächen den gleichen Abstand hat. Die Mittelebene ist überall gekennzeichnet durch y=0.

Mithilfe der T-Probe werden Messpunkte für die seitliche Begrenzung der sich gegenüberliegenden Türausschnitte (in x-Richtung und z-Richtung) gemessen und in CAD übertragen. Aus den Messpunkten werden in CAD im Best-Fit-Verfahren Flächen erzeugt. Die zuvor erzeugte neue Fläche für den Boden wird nun in z-Richtung bis zur Türoberkante verschoben. Der Ist-Koordinatenursprung liegt im Schnittpunkt der 3 Flächen: nach oben transferierte Bodenfläche, generisch erzeugte Mittelebene zwischen den Seitenwänden und generisch erzeugte Mittelebene zwischen den Stirnflächen.

Mithilfe von 5-Diodenpaaren auf jeder T-Probe kann das System erkennen mit welchem Winkel die T-Probe auf Flächen aufgesetzt wird und welche Raum-Koordinate die Messspitze hat. Je nach Fläche kommt entweder eine gerade bzw. eine um 90° abgewinkelte Spitze auf der T-Probe zum Einsatz.

### 2. Aufkleben von 7 Nestern (Kugelreflektoren)

Dies erlaubt den Lasertracker jederzeit abzubauen und wieder neu in der Rohkarosse aufzubauen ohne lange Einmessarbeiten. Das ergibt ein Referenzsystem.

### 3. Abstecken von Bohrpunkten

Anhand der Konstruktionszeichnung aus CATIA erkennen die Anwender an welchen Stellen Bohrpunkte gekörnt werden müssen. Wenn man mit der T-Probe in die Nähe einer Bohrung kommt, erkennt das System automatisch, um welche Bohrung es sich handelt. Es zeigt dem Anwender auf dem Bildschirm farblich (grün oder rot) an, ob er sich mit der T-Probe in der Nähe eines abzusteckenden Punktes befindet. Hierbei wird der numerische Wert in Zehntelmillimeter angegeben, um den der Körner bewegt werden muss.

Die gewünschte Toleranz beträgt jeweils +/- 0,1 mm. Übliche Eisenbahnwaggons haben in der Regel etwa 1.500 Bohrpunkte, für die zwei Personen etwa einen Arbeitstag benötigen. Doppelstockwagen können etwa 4000 Bohrlöcher haben, die noch nicht im Rohbau vorgebohrt wurden. Die Durchmesser der Bohrlöcher variieren von 4,5 mm bis 13 ,5 mm. Oft werden auch Gewindemuttern eingepresst.

Durch das erfindungsgemäße Verfahren konnten die geforderten Toleranzen von 0,5 mm deutlich unterschritten werden. Die Bearbeitung ist durch eine Person möglich. Das erfindungsgemäße Verfahren wird mittels eines transportablen Messsystems vor Ort durchgeführt.

Dieses vorteilhafte Ergebnis der Erfindung war überraschend und unerwartet.

### Liste der Bezugszeichen

- 1: Fahrzeug, Waggon, Wagenkasten
- 2: Lasertracker
- 3: Laserstrahl
- 4: Untere linke Ecke von S1
- 5: Obere linke Ecke von S1
- 6: Obere rechte Ecke von S1
- 7: Untere rechte Ecke von S1
- 8: Untere rechte Ecke von S2
- 9: Obere rechte Ecke von S2
- 10: Obere linke Ecke von S2
- 11: Untere linke Ecke von S2
- 12: T-Probe
- S1: Stirnseite des Waggons 1
- S2: Stirnseite des Waggons 1

## Patentansprüche

1. Verfahren zum Abstecken von Messpunkten, wobei
- Konstruktionsdaten gespeichert und Messpunkte aus den Konstruktionsdaten extrahiert werden,
- die Messpunkte abgesteckt werden,
- die Messpunkte aus den Konstruktionsdaten mit den abgesteckten Messpunkten abgeglichen werden,
- die Messpunkte aus den Konstruktionsdaten 3D-Koordinaten (x, y, z) zugewiesen werden und
- die Markierung der Messpunkte über eine T-Probe (12) erfolgt, wobei die T-Probe (12) an eine nach Konstruktionsdaten angezeigte 3D-Koordinate (x, y, z) herangeführt wird bis sich die T-Probe (12) innerhalb vorgegebener Toleranzen befindet.

2. Verfahren nach Anspruch 1, wobei Konstruktionsdaten als CAD/GIS-Daten unter Nutzung insbesondere von CATIA aufbereitet und wobei Punktdateien mit der 3D-Koordinate (x, y, z) exportiert werden und in CATIA ein dreidimensionales Modell erstellt wird.

3. Verfahren nach Anspruch 1 oder 2, wobei jeweils 6 bis 12, bevorzugt 8 bis 10 Messpunkte in einem Orientierungsprozess mit einem mobilen Lasertracker (2) gemessen werden.

4. Verfahren nach einem der Ansprüche 1 bis 3, wobei der Abgleich von virtuellem zu realem Raum durch Transformation erfolgt.

5. Verfahren nach einem der Ansprüche 1 bis 4, wobei die Referenz aus mindestens drei Reflektorkugeln besteht und die Reflektorkugeln fest an Fixpunkten montiert werden und den Ursprung des aufgespannten Koordinatensystems bilden.

6. Verfahren nach einem der Ansprüche 1 bis 5, wobei jeweils einem Messpunkt gemäß Konstruktionsdaten eine 3D-Koordinate (x, y, z) zugewiesen wird, indem an jeder Raumposition die drei Abstände des Messpunktes zu den Reflektorkugeln ermittelt werden und die Position des Messpunktes daraus mittels einer Trilateration bestimmt wird.

7. Verfahren nach einem der Ansprüche 1 bis 6, wobei der Abstand zu der gemäß Konstruktionsdaten angezeigten 3D-Koordinate (x, y, z) farblich und/oder numerisch angezeigt wird.

8. Verfahren nach Anspruch 7, wobei
- die 3D-Koordinate (x, y, z) farblich rot angezeigt wird,
- wenn die T-Probe (12) innerhalb vorgegebener Toleranzen einer 3D-Koordinate (x, y, z) gemäß Konstruktionsdaten geführt wird, die 3D-Koordinate farblich grün angezeigt wird.

9. Verfahren nach einem der Ansprüche 1 bis 8, wobei die Markierung des Messpunktes erfolgt, wenn sich die T-Probe (12) innerhalb vorgegebener Toleranzen befindet.

10. Verfahren nach einem der Ansprüche 1 bis 9, wobei gleichzeitig mit der Markierung des Messpunktes die Körnung eines Bohrlochs erfolgt.

11. Verwendung eines mobilen Lasertrackers (2) mit Absolutdistanzmesser (ADM), Interferometer (IFM), positionsempfindliche Diode (PSD), Winkelencoder und Reflektor in Verbindung mit einer T-Probe zum Abstecken von Messpunkten bei Gebäuden, Brücken, Maschinen, Fahrzeugen, Schiffen und Flugzeugen.
